# FASCICULE DE BREVET EUROPEEN

(11) **EP 1 265 419 B1**
(45) Date de publication et mention de la délivrance du brevet: **19.07.2006**
(21) Numéro de dépôt: 02291334.7
(22) Date de dépôt: 30.05.2002
(51) Int. Cl.: H04L 29/06, H04Q 7/22

(54) **Procédé de communication écrite entre deux installations à travers un réseau téléphonique**
Verfahren zur Text-basiertkommunikation zwischen zwei Kunden durch das Telefonnetz
A method for text based communication between two clients through a telephone network

(30) Priorité: 07.06.2001 FR 0107486
(43) Date de publication de la demande: 11.12.2002
(73) Titulaire: FRANCE TELECOM, 75015 Paris (FR)
(72) Inventeur: De Gouberville, Dominique, 22300 Lannion (FR); Huiban, Jean-Yves, 22300 Ploulech (FR)
(74) Mandataire: Lemoyne, Didier

(56) Documents cités:
- EP-A- 0 982 903
- AMY R. ZUNK: "Motorola Talkabout T900 Personal Interactive Communicator" GEEK.COM - CONSUMER ELECTRONICS REVIEW, 15 mars 2001 (2001-03-15), pages 1-12, XP002191009
- PATENT ABSTRACTS OF JAPAN vol. 2000, no. 22, 9 mars 2001 (2001-03-09) & JP 2001 148748 A (SATO TAKANORI), 29 mai 2001 (2001-05-29)

## Description

La présente invention concerne un procédé de communication écrite entre deux installations, à travers un réseau téléphonique, par exemple cellulaire. Ce type de procédé permet notamment aux personnes malentendantes de communiquer à travers un réseau téléphonique.

Le document US5327479 enseigne un procédé de communication écrite entre deux installations A et B à travers un réseau téléphonique, dans lequel, le droit d'écrire étant initialement attribué à l'une seule des deux installations, par exemple à l'installation A, celle-ci émet des caractères, saisis par un utilisateur, vers l'autre installation B. Concomitamment, l'installation réceptrice B inhibe l'émission de données et mémorise provisoirement les caractères éventuellement saisis par son utilisateur afin de les émettre ultérieurement vers l'installation A. Après avoir émis un nombre donné "N" de caractères, l'installation émettrice A fait une pause durant laquelle l'installation réceptrice B a la possibilité de prendre le droit d'écrire en émettant des caractères vers l'installation A. Ainsi, les deux installations sont, à un instant donné, respectivement émettrice et réceptrice et se cèdent mutuellement le droit d'écrire, de façon automatique, c'est-à-dire sans intervention d'un utilisateur, après avoir émis N caractères. Un tel procédé permet d'établir une communication "pseudo-duplex" entre les deux installations A et B. Toutefois, lorsque l'installation réceptrice souhaite émettre, elle doit attendre que l'installation émettrice ait émis N caractères et fasse une pause.

Le problème technique posé est donc de proposer un procédé de communication écrite entre deux installations A et B, à travers un réseau téléphonique, dans lequel on attribue à l'installation A un droit d'écrire, l'installation A émet des données de texte, saisies par un utilisateur, vers l'installation B, à travers le réseau, et, concomitamment, l'installation B inhibe l'émission de données de texte vers l'installation A, qui permette à l'installation réceptrice B d'obtenir le droit d'écrire de façon plus rapide.

Selon l'invention, le problème posé est résolu par le fait que pendant l'émission des données de texte de l'installation A vers l'installation B, l'installation B transmet une requête d'écriture à l'installation A, l'installation A détecte la réception de ladite requête, en informe son utilisateur et, sur commande de celui-ci, cède son droit d'écrire à l'installation B. Ainsi, pendant la transmission unidirectionnelle de données d'écriture entre les deux installations, l'installation réceptrice peut émettre une demande d'écriture afin de prendre le droit d'écrire.

De préférence, pendant l'émission de données de texte de l'installation A vers l'installation B, on bloque la saisie de données de texte dans l'installation B. Ainsi, pendant la réception de données de texte, l'installation B ne mémorise pas les caractères éventuellement frappés par l'utilisateur à l'aide de moyens de saisie, ceux-ci étant au moins partiellement rendus inactifs. Grâce à cela, on inhibe de façon simple l'émission de données de texte à partir de l'installation B.

Avantageusement, l'installation A cède son droit d'écrire à l'installation B par l'envoi d'un signal spécifique, reconnaissable par l'installation B. Ainsi, la cession du droit d'écrire se fait sur l'initiative de l'installation émettrice, de façon explicite.

Dans un mode de réalisation particulier, l'installation A invite l'installation B à établir la communication écrite par l'envoi d'un message préalable à travers le réseau téléphonique. Ainsi, avant d'appeler l'installation B, l'installation A peut lui envoyer un message d'invitation, tel qu'un message SMS. Après avoir pris connaissance de ce message, l'utilisateur de l'installation B peut préparer son installation en vue de la communication écrite.

Avantageusement, l'installation A mémorise des données de texte, saisies par son utilisateur avant l'établissement de la communication, et émet lesdites données vers l'installation B, après établissement de la communication. L'enregistrement préalable de données de texte permet de réduire la durée de la communication écrite, généralement plus lente qu'une communication orale équivalente.

Avantageusement encore, l'utilisateur de l'installation A saisit une expression textuelle prédéfinie, par sélection dans un menu d'expressions. L'utilisateur peut ainsi insérer rapidement une expression prédéfinie dans le texte de la communication, ce qui contribue également à réduire la durée de la communication.

L'invention concerne également une installation de communication écrite pour la mise en oeuvre du procédé défini ci-dessus, comprenant des moyens pour communiquer à travers un réseau téléphonique, des moyens de saisie et des moyens d'affichage, caractérisée par le fait qu'elle comprend des moyens pour détecter la réception d'une requête d'écriture, durant l'émission de données d'écriture, et pour commander l'affichage d'un signal indiquant la réception de ladite requête d'écriture.

L'invention concerne encore une installation de communication écrite pour la mise en oeuvre du procédé précédemment défini, comprenant des moyens pour communiquer à travers un réseau téléphonique, des moyens de saisie et des moyens d'affichage, caractérisée par le fait qu'elle comprend des moyens pour commander l'émission d'une requête d'écriture à travers le réseau téléphonique, durant la réception de données d'écriture.

L'invention sera mieux comprise à l'aide de la description suivante d'un mode de réalisation particulier du procédé de communication et d'une forme de réalisation particulière de l'installation de communication de l'invention, en référence au dessin annexé sur lequel:
- la figure 1 représente une vue schématique de deux installations de communication écrite A et B, reliées à un réseau téléphonique;
- la figure 2 représente un schéma bloc fonctionnel d'un terminal d'affichage et d'écriture de l'une des installations de la figure 1 et
- les figures 3 à 11 représentent un écran de communication écrite.

Le procédé de l'invention permet à deux installations A et B de communiquer entre elles par écrit, à travers un réseau téléphonique cellulaire 100, ici le réseau GSM.

Les deux installations A et B étant identiques, l'une seule va maintenant être décrite. Par souci de clarté, les éléments correspondants des deux installations A et B portent les mêmes numéros de référence, suivis des lettres A et B respectivement. L'installation A comprend un téléphone cellulaire 1A et un terminal d'affichage et d'écriture 2A, reliés l'un à l'autre par une liaison filaire entre un port de connexion du téléphone 1A (non représenté) et un port de connexion 20A du terminal 2A.

Le téléphone 1A est ici un téléphone cellulaire Sagem M8300, agencé pour communiquer à travers le réseau GSM 100, ayant accès à un service de messagerie SMS et à un service de communication en mode données. Le service de messagerie SMS permet au téléphone 1A d'envoyer et de recevoir des messages SMS, à travers un canal de signalisation du réseau cellulaire 100. Le service de communication en mode données permet au téléphone 1A d'émettre et de recevoir des données non vocales, telles que des données de télécopie ou des données informatiques, à travers le réseau cellulaire 100. Un numéro d'appel "voix" et un numéro d'appel "données" sont attribués au téléphone 1A. En cas d'appel entrant, le téléphone 1A établit avec l'appelant soit une communication vocale, soit une communication de données (c'est-à-dire non vocale), selon que l'appel est destiné au numéro "voix" ou au numéro "données".

Le terminal 2A est ici un ordinateur de poche Psion Series 5MX, comprenant un écran tactile d'affichage et de saisie 21A, un clavier de saisie 22A, une application de communication écrite 23A, un système d'exploitation 24A et une unité centrale de commande 25A, en l'espèce un microprocesseur. Tous les éléments du terminal 2A sont reliés au microprocesseur 25A, destiné à commander le fonctionnement de ces éléments.

L'application de communication écrite 23A permet à l'installation A de communiquer par écrit avec une installation distante à travers le réseau cellulaire 100. Elle est destinée à commander le fonctionnement du terminal 2A lors d'une communication écrite et à gérer un écran de communication 26A, représenté sur les figures 3 à 11, destiné à s'afficher sur l'écran 21A lors du lancement de l'application 23A. L'écran 26A comprend une barre de menus 260A, une barre d'outils 261A et une zone d'affichage et d'écriture 262A. La barre de menus 260A comprend un menu "conversation", un menu "édition", un menu "affichage", un menu "vocabulaire" et un menu "outils".

Le menu "conversation", représenté sur la figure 3, comprend les commandes suivantes:
- une commande "nouvelle" pour initialiser une nouvelle communication écrite;
- une commande "recharger dernière" pour afficher la dernière communication écrite dans la zone 262A;
- une commande "imprimer" pour imprimer le contenu de la zone d'écriture 262A;
- une commande "enregistrer" pour enregistrer la communication écrite en cours dans un fichier déterminé et
- une commande "quitter" pour fermer l'application de communication écrite.

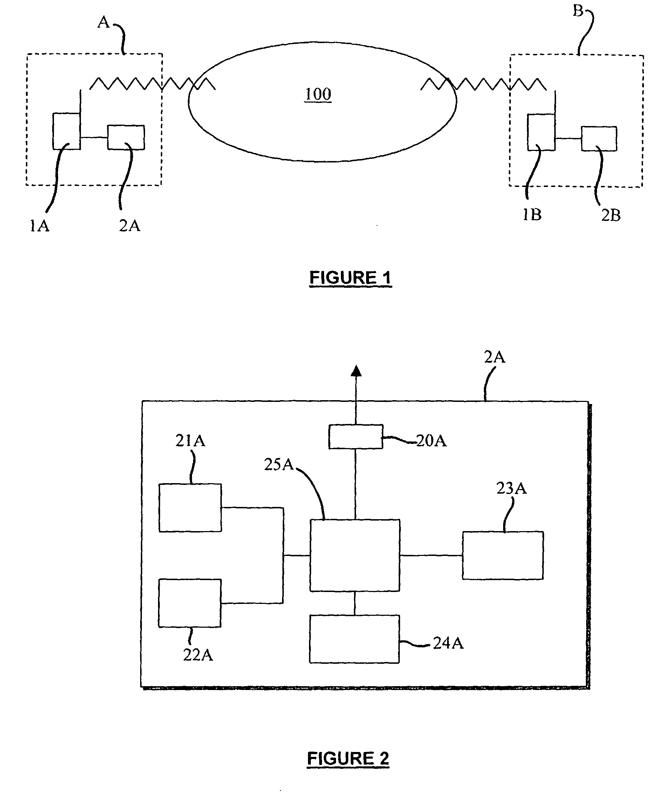

Le menu "édition", représenté sur la figure 4, comprend différentes commandes permettant de copier et de coller des parties de texte dans la zone 262A, de sélectionner tout le contenu de la zone 262A et d'effacer tout le contenu de la zone 262A.

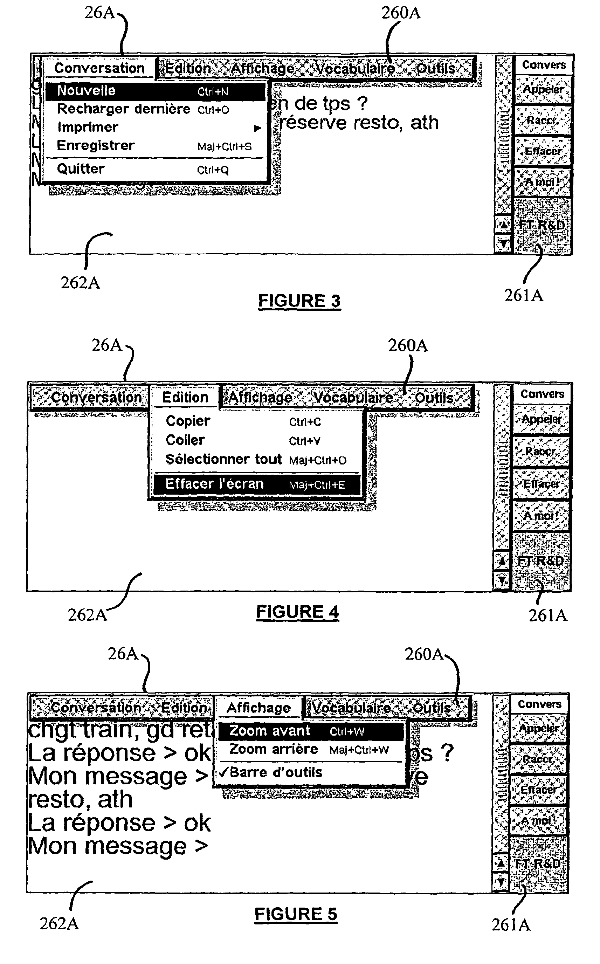

Le menu "affichage", représenté sur la figure 5, comprend deux commandes pour respectivement augmenter et réduire la taille des caractères affichés dans la zone 262A et une commande pour afficher ou pour supprimer l'affichage de la barre d'outils 261A.

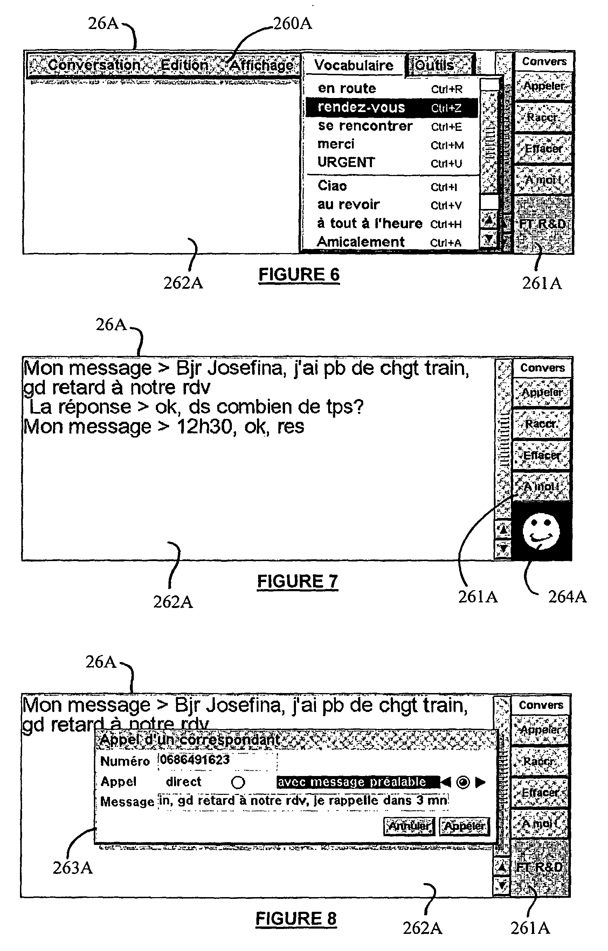

Le menu "vocabulaire", représenté sur la figure 6, comprend une liste préétablie d'expressions textuelles, qui peuvent être insérées dans le texte de la communication écrite par simple sélection dans la liste.

Le menu "outils", non représenté, comprend les commandes de la barre d'outils 261A.

La barre d'outils 261A comprend les boutons de commande suivants:
- un bouton "appeler" pour lancer un appel téléphonique en vue d'établir une communication écrite;
- un bouton "raccrocher" pour interrompre une communication écrite en cours;
- un bouton "effacer" pour effacer le contenu de la zone 262A et
- un bouton "à moi" pour demander le droit d'écrire.
   En cas d'appui sur le bouton "à moi" par l'utilisateur, lors d'une communication écrite entre l'installation A et une installation correspondante, l'application 23A est destinée à commander l'émission d'une requête d'écriture vers l'installation correspondante, à travers le réseau GSM 100.
   Lorsque l'utilisateur appuie sur le bouton "appeler", sous la commande de l'application de communication écrite 23A, le terminal 2A ouvre une fenêtre d'appel 263A, représentée sur la figure 8, sur son écran d'affichage 21A. Cette fenêtre 263A contient
- un champ "numéro" de saisie du numéro d'appel téléphonique du correspondant à appeler,
- un champ "appel" permettant de spécifier le type de l'appel (direct ou avec message préalable),
- un champ "message" de saisie du message,
- un bouton "annuler" pour fermer la fenêtre d'appel et interrompre ainsi l'appel et
- un bouton "appeler" pour lancer l'appel.

Le clavier 22A comprend des touches de caractères et une touche "entrée" permettant de commander un saut de retour à la ligne d'un curseur sur l'écran 21A. En outre, lors d'une communication écrite, un appui sur la touche "entrée" permet de céder le droit d'écrire à l'installation correspondante.

L'application 23A est agencée pour détecter la réception d'une requête d'écriture à travers le port 20A, transmise par une installation correspondante lors d'une communication écrite, et, en cas de détection d'une telle requête, à commander l'affichage d'un logo clignotant 264A, tel que représenté sur la figure 7, dans une zone spécifique de la barre d'outils 261A, afin d'indiquer la réception de la requête et de signaler à l'utilisateur de l'installation 2 que son correspondant souhaite écrire. L'application 23A est également agencée pour détecter la réception d'un signal émis par une installation correspondante sur appui par un utilisateur sur la touche "entrée", et pour interpréter ce signal comme une notification de la cession du droit d'écrire.

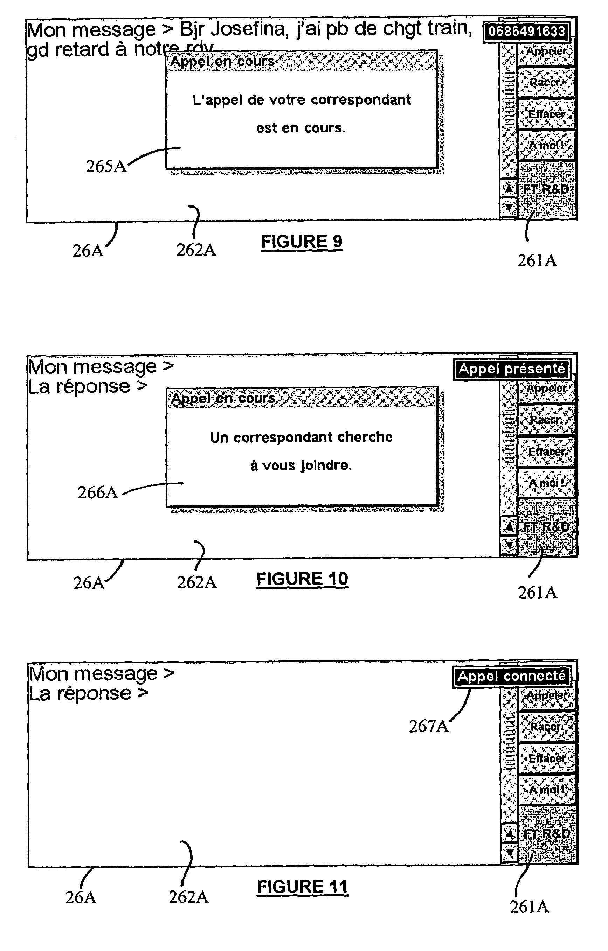

Le procédé de communication écrite entre les deux installations A et B, correspondant à la mise en oeuvre des applications de communication écrite 23A, 23B, va maintenant être décrit. Pour appeler l'installation B, l'utilisateur de l'installation A lance l'application de communication écrite sur le terminal 2A. Celui-ci ouvre alors l'écran de communication 23A sur son écran 21A. Sur commande de l'utilisateur par appui sur le bouton "appeler" de la barre d'outils 261A, l'installation A ouvre une fenêtre d'appel 263A, telle que représentée sur la figure 8. Pour inviter l'utilisateur de l'installation B à communiquer par écrit, l'utilisateur de l'installation A sélectionne un appel "avec message préalable", saisit le numéro d'appel "voix" de l'installation B et le message d'invitation, puis lance l'envoi du message SMS, par appui sur le bouton "appeler". Avant d'établir la communication écrite, le téléphone 1A émet le message SMS d'invitation vers le téléphone 1B, par un canal de signalisation, à travers le réseau cellulaire 100. Après avoir pris connaissance du message, l'utilisateur de l'installation B relie son téléphone 1B et son terminal 2B et lance l'application de communication écrite 23B sur le terminal 2B. Celui-ci ouvre alors un écran de communication écrite 26B sur son écran 21B. Par ailleurs, après appui par l'utilisateur de l'installation A sur le bouton "appeler" de la barre d'outils 261A, l'installation A ouvre une nouvelle fenêtre d'appel dans laquelle l'utilisateur sélectionne un appel direct et saisit le numéro d'appel "données" de l'installation B puis lance l'appel, par appui sur le bouton "appeler". L'installation A appelle alors l'installation B en mode données. Lors de l'établissement de l'appel, l'installation A ouvre une fenêtre 265A indiquant que l'établissement de la communication est en cours (figure 9), sur son écran 21A, et, parallèlement, l'installation B ouvre une fenêtre 266B indiquant qu'un appel est reçu (figure 10), sur son écran 21B. La communication en mode données entre les installations A et B s'établit de façon automatique, sans intervention de l'utilisateur de l'installation B. Après l'établissement de la communication, les installations A et B affichent chacune une fenêtre 267B (figure 11) indiquant que la communication est établie. Initialement, le droit d'écrire est attribué à l'appelant, autrement dit à l'installation A. Celle-ci affiche des données de texte, saisies par son utilisateur, dans la zone 262A, et les émet vers l'installation B, à travers le réseau cellulaire 100. L'installation B affiche les données de texte reçues, caractère par caractère, dans la zone 262B, sur son écran 21B. Pendant la réception des données de texte, l'installation B bloque la saisie locale de données de texte, afin d'inhiber l'émission de données de texte. Ainsi, si l'utilisateur de l'installation B frappe des caractères à l'aide du clavier 21 B, ces caractères ne sont ni affichés, ni mémorisés par l'installation B. En d'autres termes, les touches de caractère du clavier 22 sont rendues inactives. Après avoir écrit son message, l'utilisateur de l'installation A appuie sur une touche "entrée" du clavier 21A, en provoquant ainsi l'envoi d'un signal spécifique, reconnaissable par l'installation réceptrice B, destiné à indiquer à celle-ci que l'installation émettrice A lui cède le droit d'écrire. L'installation B détecte la réception du signal et l'interprète comme une notification de cession du droit d'écrire. Un saut de retour à la ligne sépare les messages successifs, alternativement écrits par les deux utilisateurs.

Si, durant l'émission de données de texte par l'une des installations, par l'exemple par l'installation A, l'utilisateur de l'installation réceptrice B souhaite écrire, il appuie sur le bouton "à moi" de la barre d'outils 261B. L'installation réceptrice B émet alors une requête d'écriture vers l'installation émettrice A. L'installation A détecte la réception de la requête d'écriture et affiche un logo clignotant 264A, afin d'en informer son utilisateur. Sur commande de celui-ci, par appui sur la touche "entrée", l'installation A cède le droit d'écrire à l'installation B.

Afin de réduire la durée de la communication écrite entre les deux installations A et B, l'installation A peut mémoriser des données de texte, saisies par son utilisateur, avant d'appeler l'installation B en mode données. Les données sont ensuite transmises à l'installation B, après établissement de la communication. Pour réduire la durée de la communication, l'utilisateur de l'installation A peut également saisir une expression textuelle prédéfinie et l'insérer dans le texte de son message, par sélection dans la liste d'expressions du menu "vocabulaire".

Au lieu de relier le téléphone cellulaire et le terminal d'affichage et d'écriture par une liaison filaire, on pourrait les relier par une liaison non filaire, par exemple de type infra-rouge ou bluetooth.

En variante, l'installation de communication écrite pourrait ne comprendre qu'un seul terminal intégrant les moyens pour communiquer à travers le réseau cellulaire, les moyens d'affichage, les moyens de saisie et l'application de communication écrite.

## Revendications

1. Procédé de communication écrite entre deux installations A et B, à travers un réseau téléphonique (100), dans lequel
- on attribue à l'installation A un droit d'écrire,
- l'installation A émet des données de texte, saisies par un utilisateur, vers l'installation B, à travers le réseau (100), et, concomitamment, l'installation B inhibe l'émission de données de texte vers l'installation A,
procédé **caractérisé par le fait que**
- pendant l'émission des données de texte de l'installation A vers l'installation B, l'installation B transmet une requête d'écriture à l'installation A,
- l'installation A détecte la réception de ladite requête, en informe son utilisateur et, sur commande de celui-ci, cède son droit d'écrire à l'installation B.

2. Procédé selon la revendication 1, dans lequel, pendant l'émission de données de texte de l'installation A vers l'installation B, on bloque la saisie de données de texte dans l'installation B.

3. Procédé selon l'une des revendications 1 et 2, dans lequel, l'installation A cède son droit d'écrire à l'installation B par l'envoi d'un signal spécifique, reconnaissable par l'installation B.

4. Procédé selon l'une des revendications 1 à 3, dans lequel l'installation A invite l'installation B à établir la communication écrite par l'envoi d'un message préalable à travers le réseau téléphonique (100).

5. Procédé selon l'une des revendications 1 à 4, dans lequel l'installation A mémorise des données de texte, saisies par son utilisateur avant l'établissement de la communication, et émet lesdites données vers l'installation B, après établissement de la communication.

6. Procédé selon l'une des revendications 1 à 5, dans lequel l'utilisateur de l'installation A saisit une expression textuelle prédéfinie, par sélection dans un menu d'expressions.

7. Procédé selon l'une des revendications 1 à 6, dans lequel, pour appeler l'installation B, l'installation A ouvre une fenêtre d'appel d'un correspondant (263A) dans laquelle l'utilisateur saisit un numéro d'appel de l'installation B.

8. Procédé selon l'une des revendications 1 à 7, dans lequel, lors de l'établissement de la communication, l'installation A ouvre successivement une fenêtre (265A) indiquant que l'établissement de la communication est en cours et une fenêtre (267A) indiquant que la communication est établie.

9. Procédé selon l'une des revendications 1 à 8, dans lequel, à la réception de l'appel de l'installation A, l'installation B ouvre une fenêtre (266B) indiquant qu'un appel est reçu.

10. Installation de communication écrite pour la mise en oeuvre du procédé de la revendication 1, comprenant des moyens (1A) pour communiquer à travers un réseau téléphonique (100), des moyens de saisie (21A, 22A, 26A) et des moyens d'affichage (21A), **caractérisée par le fait qu**'elle comprend des moyens (23A) pour détecter la réception d'une requête d'écriture, durant l'émission de données d'écriture, et pour commander l'affichage d'un signal (264A) indiquant la réception de ladite requête d'écriture.

11. Installation de communication écrite pour la mise en oeuvre du procédé de la revendication 1, comprenant des moyens (1B) pour communiquer à travers un réseau téléphonique (100), des moyens de saisie (21B, 22B, 26B) et des moyens d'affichage (21B), **caractérisée par le fait qu**'elle comprend des moyens (23B, 261 A) pour commander l'émission d'une requête d'écriture à travers le réseau téléphonique (100), durant la réception de données d'écriture.

12. Installation selon la revendication 11, dans laquelle il est prévu des moyens (23B) pour bloquer la saisie de données de texte durant la réception de données de texte transmises à travers le réseau téléphonique (100).

## Claims

1. Method of written communication between two installations A and B, through a telephone network (100), in which
- a right to write is given to installation A,
- the installation A sends text data, entered by a user, to the installation B, through the network (100), and, concomitantly, the installation B inhibits the sending of text data to the installation A,
method **characterized in that**
- during the sending of the text data from installation A to installation B, installation B transmits a write request to installation A,
- installation A detects the receipt of the said request, informs its user thereof and, on command therefrom, gives up its right to write to installation B.

2. Method according to Claim 1, in which, during the sending of text data from installation A to installation B, the entry of text data in installation B is disabled.

3. Method according to one of Claims 1 and 2, in which, installation A gives up its right to write to installation B by dispatching a specific signal, recognizable by installation B.

4. Method according to one of Claims 1 to 3, in which installation A invites installation B to set up the written communication by dispatching a prior message through the telephone network (100).

5. Method according to one of Claims 1 to 4, in which installation A stores text data, entered by its user before the setup of communication, and sends the said data to installation B, after setup of communication.

6. Method according to one of Claims 1 to 5, in which the user of installation A enters a predefined textual expression, by selection from a menu of expressions.

7. Method according to one of Claims 1 to 6, in which, to call installation B, installation A opens a call window of a corresponding party (263A), into which the user enters a call number of installation B.

8. Method according to one of Claims 1 to 7, in which, during setup of the communication, installation A opens successively a window (265A) indicating that the setup of the communication is in progress and a window (267A) indicating that the communication is set up.

9. Method according to one of Claims 1 to 8, in which, on receipt of the call of installation A, installation B opens a window (266B) indicating that a call is received.

10. Installation for written communication for the implementation of the method of Claim 1, comprising means (1A) for communicating through a telephone network (100), means of entry (21A, 22A, 26A) and means of display (21A), **characterized in that** it comprises means (23A) for detecting the receipt of a write request, during the sending of write data, and for controlling the displaying of a signal (264A) indicating the receipt of the said write request.

11. Installation for written communication for the implementation of the method of Claim 1, comprising means (1B) for communicating through a telephone network (100), means of entry (21B, 22B, 26B) and means of display (21B), **characterized in that** it comprises means (23B, 261A) for controlling the sending of a write request through the telephone network (100), during the receipt of write data.

12. Installation according to Claim 11, in which there are provided means (23B) for disabling the entry of text data during the receipt of text data transmitted through the telephone network (100).

## Patentansprüche

1. Verfahren zur schriftlichen Kommunikation zwischen zwei Anlagen A und B über ein Telefonnetz (100), bei dem
- der Anlage A ein Schreibrecht zugeteilt wird,
- die Anlage A von einem Benutzer eingegebene Textdaten über das Netz (100) zur Anlage B sendet, und gleichzeitig die Anlage B das Senden von Textdaten zur Anlage A sperrt,
**dadurch gekennzeichnet, dass**
- während des Sendens der Textdaten von der Anlage A zur Anlage B die Anlage B eine Schreibanforderung an die Anlage A überträgt,
- die Anlage A den Empfang der Anforderung erfasst, ihren Benutzer darüber informiert, und auf dessen Befehl ihr Schreibrecht an die Anlage B abtritt.

2. Verfahren nach Anspruch 1, bei dem während des Sendens von Textdaten von der Anlage A zur Anlage B die Eingabe von Textdaten in der Anlage B blockiert wird.

3. Verfahren nach einem der Ansprüche 1 und 2, bei dem die Anlage A durch Senden eines spezifischen Signals, das für die Anlage B erkennbar ist, ihr Schreibrecht an die Anlage B abtritt.

4. Verfahren nach einem der Ansprüche 1 bis 3, bei dem die Anlage A die Anlage B auffordert, die schriftliche Kommunikation durch das Senden einer vorhergehenden Mitteilung über das Telefonnetz (100) aufzubauen.

5. Verfahren nach einem der Ansprüche 1 bis 4, bei dem die Anlage A Textdaten speichert, die von ihrem Benutzer vor dem Aufbau der Kommunikation eingegeben wurden, und diese Daten nach dem Aufbau der Kommunikation zur Anlage B sendet.

6. Verfahren nach einem der Ansprüche 1 bis 5, bei dem der Benutzer der Anlage A durch Auswahl in einem Textformel-Menü eine vordefinierte Textformel eingibt.

7. Verfahren nach einem der Ansprüche 1 bis 6, bei dem die Anlage A, um die Anlage B anzurufen, ein Anruffenster eines Teilnehmers (263A) öffnet, in das der Benutzer eine Rufnummer der Anlage B eingibt.

8. Verfahren nach einem der Ansprüche 1 bis 7, bei dem die Anlage A beim Aufbau der Kommunikation nacheinander ein Fenster (265A), das anzeigt, dass der Aufbau der Kommunikation gerade stattfindet, und ein Fenster (267A) öffnet, das anzeigt, dass die Kommunikation aufgebaut ist.

9. Verfahren nach einem der Ansprüche 1 bis 8, bei dem die Anlage B bei Empfang des Anrufs von der Anlage A ein Fenster (266B) öffnet, das anzeigt, dass ein Anruf empfangen wird.

10. Anlage zur schriftlichen Kommunikation zur Anwendung des Verfahrens des Anspruchs 1, die Mittel (1A), um über ein Telefonnetz (100) zu kommunizieren, Eingabemittel (21A, 22A, 26A) und Anzeigemittel (21A) aufweist, **dadurch gekennzeichnet, dass** sie Mittel (23A) aufweist, um während des Sendens von Schreibdaten den Empfang einer Schreibanforderung zu erfassen, und um die Anzeige eines Signals (264A) zu steuern, das den Empfang der Schreibanforderung anzeigt.

11. Anlage zur schriftlichen Kommunikation zur Anwendung des Verfahrens des Anspruchs 1, die Mittel (1B), um über ein Telefonnetz (100) zu kommunizieren, Eingabemittel (21B, 22B, 26B) und Anzeigemittel (21B) aufweist, **dadurch gekennzeichnet, dass** sie Mittel (23B, 261A) aufweist, um während des Empfangs von Schreibdaten das Senden einer Schreibanforderung über das Telefonnetz (100) zu steuern.

12. Anlage nach Anspruch 11, bei der Mittel (23B) vorgesehen sind, um die Eingabe von Textdaten während des Empfangs von Textdaten zu blockieren, die über das Telefonnetz (100) übertragen werden.
